# EUROPÄISCHE PATENTSCHRIFT

(11) **EP 1 897 662 B1**
(45) Veröffentlichungstag und Bekanntmachung des Hinweises auf die Patenterteilung: **06.03.2013**
(21) Anmeldenummer: 07113167.6
(22) Anmeldetag: 26.07.2007
(51) Int. Cl.: B25F 5/02, B25H 1/00, B23Q 17/22, B23Q 17/24

(54) **Handwerkzeugmaschineneinheit**
Hand tool machine unit
Unité de machine-outil manuelle

(30) Priorität: 06.09.2006 DE 102006041672
(43) Veröffentlichungstag der Anmeldung: 12.03.2008
(73) Patentinhaber: ROBERT BOSCH GMBH, 70442 Stuttgart (DE)
(72) Erfinder: Tiede, Steffen, 71083 Herrenberg (DE)

(56) Entgegenhaltungen:
- EP-A- 1 249 291
- WO-A-2006/074609
- US-A1- 2004 093 749

## Beschreibung

Die Erfindung geht aus von einer Handwerkzeugmaschineneinheit mit einer Markiervorrichtung nach dem Oberbegriff des Anspruchs 1.

Es ist eine Handwerkzeugmaschine mit einer Markiervorrichtung bekannt. Mittels der Markiervorrichtung kann auf einem mittels der Handwerkzeugmaschine zu bearbeitenden Werkstück eine Markierung angezeigt werden.

Aus der WO 2006/074609 A1 ist eine Vorrichtung zur Bestimmung der Neigung eines Werkzeuges, wie beispielsweise einer elektrischen Bohrmaschine, bekannt, bei der ein Markierungssignal, welches von einem mit der Maschine verbundenen Laser ausgesendet wird mittels einer als frei schwingendem Pendel ausgebildeten Linse eine waagerechte Linie definiert. Die als Zylinderlinse ausgebildete Linse der Vorrichtung der D1 fächert den Laserstrahl in der horizontalen Ebene auf, so dass sich bei horizontaler Orientierung der Werkzeugmaschine zur Horizontalen eine horizontale Markierungslinie auf dem zu bearbeitenden Werkstück abzeichnet. Wird die Werkzeugmaschine um einen gewissen Winkel gegenüber der Horizontalen und somit gegenüber dem Linsenpendel geneigt, erzeugt der durch die Linse durchtretende Laserstrahl auf dem zu bearbeitenden Werkstück eine gekrümmte Markierung, die als Indikator der Neigung der Werkzeugmaschine anzusehen ist. Die Markierungsvorrichtung der D1 besteht dabei aus einer auf dem Maschinengehäuse der Werkzeugmaschine montierten Laserdiode, sowie einem über eine "Galgenstrukturr" vor die Laserdiode gesetzten Zylinderlinse..

Aus der EP 1249291 A2 ist eine Positionierhilfe für Handwerkzeuggeräte bekannt, welche ein berührungsloses Entfernungsmesssystem mit zumindest einem Entfernungsmesssensor zur Messung der Entfernung vom Entfernungsmesssensor zu einem Objekt entlang einer Messrichtung aufweist. Bei der Vorrichtung der D2 handelt es sich somit nicht um eine Markiervorrichtung zur Anzeige einer Markierung an einem Werkstück, sondern vielmehr um eine Vorrichtung zur Bestimmung des Abstandes der Maschine bzw. des Entfernungsmesssensors von einem Werkstück bzw. zur Abstandsbestimmung in drei orthogonalen Koordinaten relativ zum Entfernungsmesssystem. In einem Ausführungsbeispiel der Vorrichtung der D2 ist ein Entfernungsmesssensor des Entfernungsmesssystems mit einer, durch einen elektromechanischen Tragarm als Auslenkmittel schwingend einen Scannbereich abtastenden, die Laserdiode an einem, an der Werkstückoberfläche anliegenden, Saugkopf eine axial federnd vorgespannten beweglichen Staubabsaugung eines Handwerkzeuggerätes befestigt.

Aus der US 2004/0093749 A1 ist ein Hilfshandgriff für eine Bohrmaschine bekannt, welcher mittels eines optischen Signals die Ausrichtung der Werkzeugmaschine erlaubt. Dazu ist an dem Hilfshandgriff eine Laserdiode angeordnet, welche über eine Zylinderoptik ein fächerförmiges Lichtsignal erzeugt, welches wiederum auf einem Werkstück eine Markierungslinie hervorruft. in einem Ausführungsbeispiel dieser Vorrichtung besitzt der Hilfshandgriff eine weitere Hilfsstruktur mit einer weiteren, zweiten Laserdiode, die es für eine entsprechende Optik ermöglicht, eine zweite Markierungslinie auf dem zu bearbeitenden Werkstück zu erzeugen.

### Vorteile der Erfindung

Die Erfindung geht aus von einer Handwerkzeugmaschineneinheit mit einer Markiervorrichtung zur Anzeige einer Markierung an einem Werkstück und einer Koppeleinheit zum Koppeln an einer Handwerkzeugmaschine.

Rs wird vorgeschlagen, dass die Handwerkzeugmaschineneinheit eine Ausrichtungseinheit aufweist, die dazu dient, die Markiervorrichtung auszurichten. Dadurch können ein hoher Bedienkomfort und ein präzises und schnelles Bearbeiten des Werkstücks erreicht werden. Vorteilhafterweise dient die Ausrichtungseinheit dazu, mittels einer Referenzachse die Markiervorrichtung in eine für eine Soll-Ausrichtung der Markierung erforderliche Soll-Position relativ zur Referenzachse auszurichten. Die Referenzachse ist vorteilhafterweise eine relativ zum Werkstück fest stehende Achse, die zu einem Vergleich einer Ist-Position der Markiervorrichtung mit deren zu erreichender Soll-Position dient. Vorzugsweise entspricht die Referenzachse einer durch eine physikalische Kraft vorgegebenen Achse, wie z.B. der Schwerkraftachse. Die Ausrichtungseinheit weist zweckmäßigerweise ein Mittel auf, welches dazu vorgesehen ist, die Referenzachse für eine Ausrichtung der Markiervorrichtung in die Soll-Position zumindest zu berücksichtigen. Das Mittel dient dabei vorteilhafterweise zum Berücksichtigen einer Abweichung zwischen der Ist-Position und der Soll-Position der Markiervorrichtung. Beispielsweise kann das Mittel eine Information über diese Abweichung ausgeben oder das Mittel kann zu einer zumindest teilautomatischen, vorzugsweise vollautomatischen Ausrichtung der Markiervorrichtung anhand dieser Abweichung vorgesehen sein. Im gekoppelten Zustand der Handwerkzeugmaschineneinheit an einer Handwerkzeugmaschine kann die Ausrichtung der Markiervorrichtung durchgeführt werden, ohne dafür ein zur Handwerkzeugmaschine zusätzliches Mittel zum Vorgeben der Referenzachse einsetzen zu müssen, wie z.B. ein zusätzliches Nivelliermittel.

Die Ausrichtungseinheit kann zu einer manuellen Ausrichtung der Markiervorrichtung relativ zum Werkstück dienen. Hierzu weist die Ausrichtungseinheit vorzugsweise eine Nivelliervorrichtung auf, durch welche der Bediener über eine Ist-Position der Markiervorrichtung relativ zur zu erreichenden Soll-Position informiert werden kann. Zweckmäßigerweise ist diese Nivelliervorrichtung fest mit der Markiervorrichtung gelagert. Der Bediener kann durch die Nivelliervorrichtung die Ist-Position und die Soll-Position direkt vergleichen, wie z.B. bei einer Wasserwaage, und/oder es kann ein optisches und/oder akustisches Informationssignal über die Ist-Position der Markiervorrichtung, über ein Abweichen der Ist-Position von der Soll-Position und über das Erreichen der gewünschten Soll-Position usw. dem Bediener ausgegeben werden.

Zur Erfassung von einem Ausrichtungszustand der Markiervorrichtung relativ zur Soll-Position kann ein Sensormittel eingesetzt werden. Dabei können z.B. Sensormittel eingesetzt werden, die über die Bewegung eines beweglichen Körpers, wie z.B. über die Bewegung eines Pendels, eine Kapazitätsänderung und/oder eine Konduktivitätsänderung erfassen. Die Sensormittel können auch als mikromechanische Siliziumstrukturen (MEMS oder Micro-Electro-Mechanical System) ausgeführt sein. Außerdem sind weitere Sensoren denkbar, die einen Elektrolyten enthalten und die Ausrichtungsinformationen konduktometrisch oder kapazitiv erfassen. Des Weiteren können die Sensormittel als Hall-Sensoren ausgebildet sein, die sich am Erdmagnetfeld oder am Magnetfeld eines beweglichen Dauermagnets orientieren. Ferner ist der Einsatz von Libellen denkbar, die von optoelektronischen Bauelementen ausgelesen werden.

Außerdem kann die Ausrichtungseinheit dazu vorgesehen sein, die Markiervorrichtung zumindest teilautomatisch, vorzugsweise vollautomatisch in eine für eine Soll-Ausrichtung der Markierung erforderliche Soll-Position relativ zur Referenzachse auszurichten, wodurch ein besonders hoher Bedienkomfort erreicht werden kann. Hierzu weist die Ausrichtungseinheit vorzugsweise eine Antriebseinheit auf, die zum Antreiben einer Bewegung der Markiervorrichtung relativ zum Werkstück und/oder im gekoppelten Zustand der Handwerkzeugmaschineneinheit an einer Handwerkzeugmaschine relativ zur Handwerkzeugmaschine vorgesehen ist. Eine kostengünstige Ausrichtungseinheit kann eingesetzt werden, wenn diese zum Antrieb mittels der Schwerkraft vorgesehen ist.

Eine zumindest teilautomatische Ausrichtung der Markiervorrichtung kann konstruktiv einfach erreicht werden, wenn die Ausrichtungseinheit wenigstens ein Entkopplungsmittel aufweist, welches im gekoppelten Zustand der Handwerkzeugmaschineneinheit an einer Handwerkzeugmaschine zur Entkopplung der Markiervorrichtung von der Handwerkzeugmaschine in zumindest einem Freiheitsgrad vorgesehen ist. Dadurch kann bei einer Bewegung der Handwerkzeugmaschine relativ zum Werkstück die Soll-Position der Markiervorrichtung relativ zum Werkstück aufrechterhalten werden.

Wesentlich ist, dass die Handwerkzeugmaschineneinheit ein Trägermittel aufweist, das im gekoppelten Zustand der Handwerkzeugmaschineneinheit an einer Handwerkzeugmaschine in einen Werkzeugaufnahmebereich der Handwerkzeugmaschine eingreift. Dadurch kann einfach eine Anordnung von Funktionsteilen im Werkzeugaufnahmebereich erreicht werden. Unter einem "Werkzeugaufnahmebereich" kann in diesem Zusammenhang insbesondere ein Bereich verstanden werden, welcher vor einer Werkzeugaufnahme der Handwerkzeugmaschine angeordnet ist. Dieser Bereich ist "vor" der Werkzeugaufnahme der Handwerkzeugmaschine angeordnet, wenn er z.B. in Richtung der Werkzeugaufnahme zur Antriebseinheit der Handwerkzeugmaschine vor der Werkzeugaufnahme angeordnet ist. Das Trägermittel kann zumindest teilweise einstückig mit der Koppeleinheit ausgebildet sein.

Es wird außerdem vorgeschlagen, dass im gekoppelten Zustand der Handwerkzeugmaschineneinheit an einer Handwerkzeugmaschine die Markiervorrichtung mittels des Trägermittels vor einer Werkzeugaufnahme der Handwerkzeugmaschine angeordnet ist, wodurch eine präzise Markierung an einem Werkstück erreicht werden kann. Bei einer Bearbeitung des Werkstücks mittels der Handwerkzeugmaschine kann dabei die Markiervorrichtung zwischen der Werkzeugaufnahme und dem Werkstück angeordnet sein. Dadurch kann ein kleiner Abstand zwischen der Markiervorrichtung und dem Werkstück erreicht werden, wobei eine präzise, insbesondere scharfe Markierung mittels einer geringen Strahlintensität der Markiervorrichtung erreicht werden kann.

Ferner wird vorgeschlagen, dass mittels des Trägermittels die Markiervorrichtung im Bereich einer Werkzeugachse der Handwerkzeugmaschine angeordnet ist. Es kann dadurch eine präzise Markierung einer Bearbeitungsposition am Werkstück erreicht werden. Insbesondere kann ein kleiner Winkel zwischen einem von der Markiervorrichtung erzeugten Markierungsstrahl und der Werkzeugachse erreicht werden.

Wesentlich für die Erfindung ist, dass im gekoppelten Zustand der Handwerkzeugmaschineneinheit an einer Handwerkzeugmaschine die Markiervorrichtung eine Werkzeugachse der Handwerkzeugmaschine umschließt, wodurch eine kompakte Anordnung der Handwerkzeugmaschineneinheit und der Handwerkzeugmaschine erreicht werden kann.

Eine konstruktiv einfache und Platz sparende Anordnung der Markiervorrichtung kann erreicht werden, wenn die Handwerkzeugmaschineneinheit eine Durchführeinheit aufweist, die zur Durchführung eines Werkzeugs vorgesehen ist, mit welcher die Markiervorrichtung direkt gekoppelt ist. Ein besonders kleiner Abstand der Markiervorrichtung zur Werkzeugachse kann erreicht werden, wenn die Markiervorrichtung in der Durchführeinheit angeordnet ist.

Vorzugsweise weist die Handwerkzeugmaschineneinheit ein Abstützmittel auf, welches zur Abstützung am Werkstück vorgesehen ist. Dadurch kann eine hohe Stabilität der Markiervorrichtung im Vorfeld und während einer Bearbeitung des Werkstücks erreicht werden.

In einer bevorzugten Weiterbildung der Erfindung wird vorgeschlagen, dass die Handwerkzeugmaschineneinheit eine Einheit aufweist, die dazu vorgesehen ist, bei einer Bearbeitung des Werkstücks einen Abstand zwischen der Markiervorrichtung und dem Werkstück aufrechtzuerhalten. Dadurch kann vorteilhaft eine Position einer durch die Markiervorrichtung erzeugten Markierung am Werkstück bei der Bearbeitung aufrechterhalten werden. Der Abstand ist vorzugsweise ein Abstand entlang einer Bearbeitungsrichtung einer Handwerkzeugmaschine, an der die Handwerkzeugmaschineneinheit gekoppelt werden kann, wobei die Handwerkzeugmaschine bei der Bearbeitung entlang dieser Bearbeitungsrichtung bewegt wird. Vorzugsweise ist hierzu die Handwerkzeugmaschineneinheit im gekoppelten Zustand durch die Einheit in der Bearbeitungsrichtung von der Handwerkzeugmaschine zumindest teilweise entkoppelt.

Zweckmäßigerweise weist die Handwerkzeugmaschineneinheit ein drehbares Lagermittel auf, mittels dessen im gekoppelten Zustand der Handwerkzeugmaschineneinheit an einer Handwerkzeugmaschine die Markiervorrichtung relativ zur Handwerkzeugmaschine drehbar gelagert ist. Dadurch kann eine automatische Ausrichtung der Markiervorrichtung konstruktiv einfach erreicht werden. Das Lagermittel ist vorzugsweise teilweise einstückig mit der Ausrichtungseinheit ausgebildet.

Dies kann konstruktiv einfach mit robusten Mitteln erreicht werden, wenn die Ausrichtungseinheit eine Kugellagerung zur Lagerung der Markiervorrichtung aufweist.

Des Weiteren wird vorgeschlagen, dass die Handwerkzeugmaschineneinheit eine Schwingungsentkopplungseinheit aufweist, die dazu vorgesehen ist, im gekoppelten Zustand der Handwerkzeugmaschineneinheit an einer Handwerkzeugmaschine einer Übertragung von Schwingungen der Handwerkzeugmaschine auf die Markiervorrichtung entgegenzuwirken. Dadurch können eine hohe Stabilität einer angezeigten Markierung und ein vorteilhafter Schutz von Komponenten der Markiervorrichtung erreicht werden.

Eine hohe Flexibilität in der Anwendung der Handwerkzeugmaschineneinheit kann erreicht werden, wenn diese als Handwerkzeugmaschinenzusatzeinheit ausgebildet ist, welche zur Abkopplung von einem Handwerkzeugmaschinengrundkörper vorgesehen ist. Hierzu weist die Handwerkzeugmaschineneinheit vorzugsweise ein Mittel zur lösbaren Befestigung an der Handwerkzeugmaschine auf. Vorzugsweise ist die Handwerkzeugmaschineneinheit als Vorsatzmodul ausgebildet. Dabei weist ein Vorsatzmodul vorzugsweise zumindest einen Teilbereich auf, welcher im gekoppelten Zustand der Handwerkzeugmaschineneinheit an einer Handwerkzeugmaschine vor einer Werkzeugaufnahme der Handwerkzeugmaschine angeordnet ist. Die Handwerkzeugmaschineneinheit kann in entkoppeltem Zustand als eigenständiges Gerät unabhängig von einer Handwerkzeugmaschine genutzt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Bohrmaschine, an welcher ein Vorsatzmodul mit einer Markiervorrichtung gekoppelt ist, in einer Teilschnittansicht,
- Fig. 2: das Vorsatzmodul aus Figur 1 in einer Frontansicht,
- Fig. 3: die Bohrmaschine und das Vorsatzmodul aus Figur 1 mit einer selbst ausrichtenden Markiervorrichtung,
- Fig. 4: die Markiervorrichtung aus Figur 3 in einer Frontansicht,
- Fig. 5: eine durch die Markiervorrichtung aus Figur 1 auf einem Werkstück angezeigte Markierung und
- Fig. 6: die Anordnung der Bohrmaschine und des Vorsatzmoduls bei der Bearbeitung eines Werkstücks.

### Beschreibung der Ausführungsbeispiele

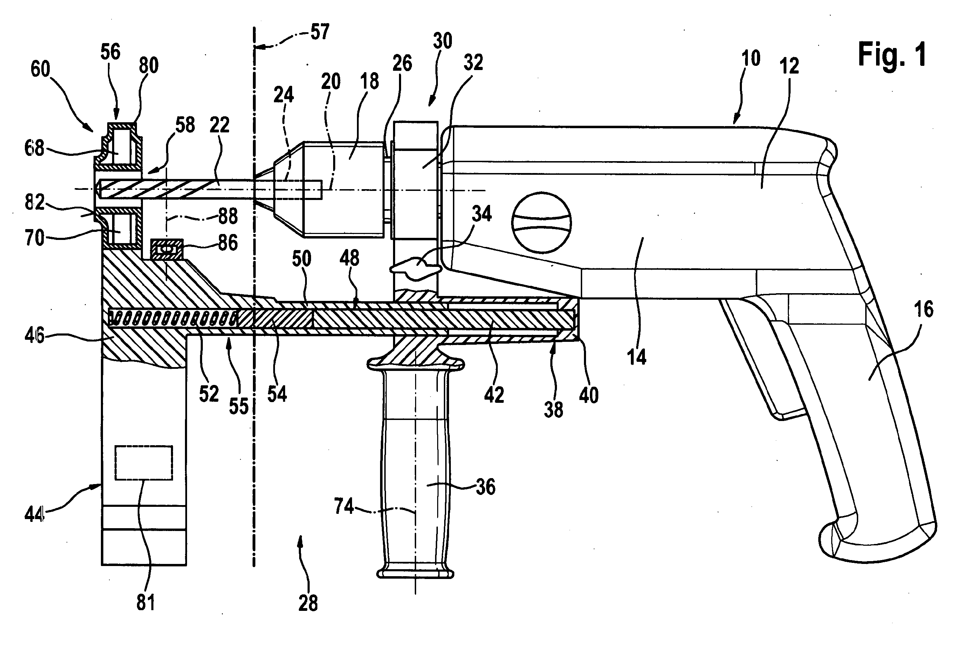

Figur 1 zeigt eine als Bohrmaschine ausgebildete Handwerkzeugmaschine 10 in einer Seitenansicht. Diese weist einen Handwerkzeugmaschinengrundkörper 12 mit einem Motorgehäuse 14 und einem Handgriff 16 und eine Werkzeugaufnahme 18 auf. In die Werkzeugaufnahme 18 kann entlang einer Werkzeugachse 20 ein als Bohrer ausgebildetes Werkzeug 22 eingeführt und drehfest befestigt werden. Hierzu weist die Werkzeugaufnahme 18 einen zylinderförmigen Hohlraum 24 mit einer Zylinderachse auf, die der Werkzeugachse 20 entspricht. Die Werkzeugaufnahme 18 ist durch einen Spannhals 26 mit dem Motorgehäuse 14 verbunden.

Am Spannhals 26 ist eine als Vorsatzmodul ausgebildete Handwerkzeugmaschineneinheit 28 befestigt. Hierzu weist die Handwerkzeugmaschineneinheit 28 eine Koppeleinheit 30 auf, die zur Befestigung an der Handwerkzeugmaschine 10 vorgesehen ist. Die Koppeleinheit 30 umfasst ein ringförmiges Klemmelement 32, welches im montierten Zustand den Spannhals 26 umgreift und das mittels einer Schraube 34 am Spannhals 26 festgeklemmt ist. Die Handwerkzeugmaschineneinheit 28 weist außerdem einen Zusatzhandgriff 36 auf, welcher einstückig mit der Koppeleinheit 30 ausgebildet ist. Die Koppeleinheit 30 und der Zusatzhandgriff 36 sind im gekoppelten Zustand der Handwerkzeugmaschineneinheit 28 relativ zur Handwerkzeugmaschine 10 fest gelagert. Die Handwerkzeugmaschineneinheit 28 umfasst ferner ein Führungsmittel 38, welches ein Gehäuse 40 aufweist, das an den Zusatzhandgriff 36 angeformt ist. Innerhalb des Gehäuses 40 und an diesem Gehäuse 40 befestigt ist ein längliches, stabförmiges, sich entlang der Werkzeugachse 20 erstreckendes Führungselement 42 angeordnet. Das Führungselement 42 ragt aus dem Gehäuse 40 in einer Richtung heraus, welche parallel zur Werkzeugachse 20 ausgerichtet ist und von dem Handwerkzeugmaschinengrundkörper 12 wegführt. Die Handwerkzeugmaschineneinheit 28 weist ferner eine Vorsatzeinheit 44 auf, die relativ zum Gehäuse 40 beweglich gelagert ist. Die Vorsatzeinheit 44 weist einen Grundkörper 46 auf, an den ein einen Hohlraum 48 bildender Fortsatz 50 angeformt ist. Dieser Fortsatz 50 greift in das Führungsmittel 38 ein, wobei das Führungselement 42 in den Hohlraum 48 der Vorsatzeinheit 44 eingreift. Bei einer Bewegung des Fortsatzes 50 relativ zur Handwerkzeugmaschine 10 wird der Fortsatz 50 gegen Verdrehung gesichert im Gehäuse 40 geführt. Die Vorsatzeinheit 44 ist ferner mit einer Schwingungsentkopplungseinheit 52 versehen, die als Druckfeder ausgebildet ist. Diese ist einerseits am Grundkörper 46 abgestützt. Sie erstreckt sich entlang der Werkzeugachse 20 in Richtung des Handwerkzeugmaschinengrundkörpers 14 im vom Fortsatz 50 gebildeten Hohlraum 48, in dem sie an einem im Hohlraum 48 beweglich gelagerten Stützmittel 54 abgestützt ist. Das Stützmittel 54 stützt sich selbst auf dem Führungselement 42 ab.

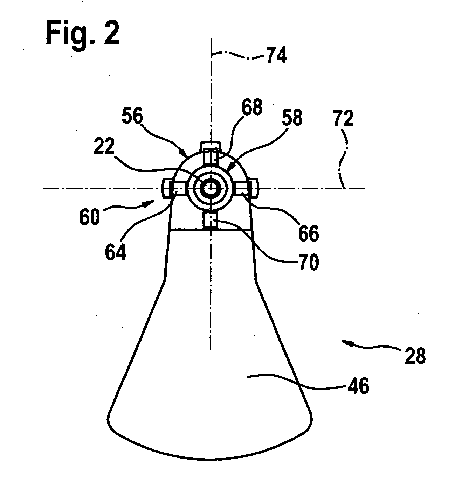

Zur Beschreibung der Vorsatzeinheit 44 wird auf die Figuren 1 und 2 verwiesen, wobei Figur 2 die Handwerkzeugmaschineneinheit 28 in einer Frontansicht darstellt.

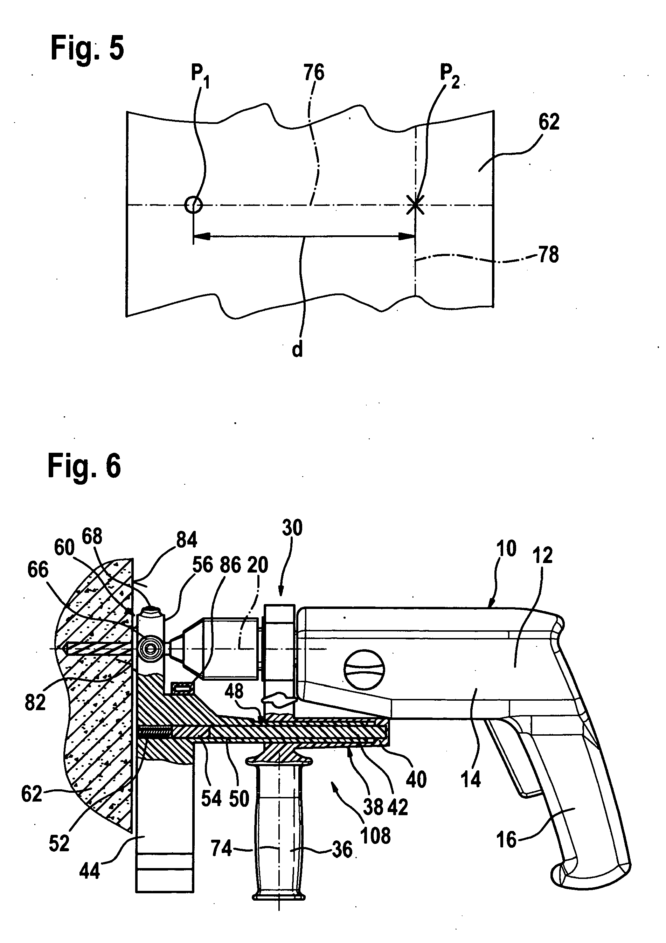

Der Grundkörper 46 und das Führungsmittel 38 bilden ein Trägermittel 55, welches in den Werkzeugaufnahmebereich 57 der Handwerkzeugmaschine 10 eingreift. Der Werkzeugaufnahmebereich 57 entspricht einem Raumbereich, welcher in Richtung der Werkzeugaufnahme 18 zum Motorgehäuse 14 vor der Werkzeugaufnahme 18 angeordnet ist. Der Werkzeugaufnahmebereich 57 ist in der Figur durch eine gestrichelte Linie schematisch begrenzt. Die Vorsatzeinheit 44 ist mit einer Durchführeinheit 56 versehen, durch welche das Werkzeug 22 durchgeführt ist, die vom Trägermittel 55 getragen ist. Hierbei ist die Durchführeinheit 56 ringförmig ausgebildet und bildet einen zylinderförmigen Hohlraum 58. Die Zylinderachse dieses Hohlraums 58 entspricht der Werkzeugachse 20. Die Handwerkzeugmaschineneinheit 28 weist außerdem eine Markiervorrichtung 60 auf, die zur Anzeige einer Markierung an einem als Wand ausgeführten Werkstück 62 (siehe Figur 5) vorgesehen ist. Hierzu weist die Markiervorrichtung 60 einen Satz von Lasereinheiten 64, 66, 68, 70 zum Erzeugen eines Laserstrahls auf. Ein erstes Paar von Lasereinheiten 64, 66 ist entlang einer ersten Achse angeordnet, die in horizontaler Richtung 72 der Handwerkzeugmaschine 10 ausgerichtet ist und die Werkzeugachse 20 trifft, während ein weiteres Paar von Lasereinheiten 68, 70 entlang einer zweiten Achse angeordnet ist, die in vertikaler Richtung 74 der Handwerkzeugmaschine 10 ausgerichtet ist und ebenfalls die Werkzeugachse 20 trifft. Hierbei sind die horizontale und die vertikale Richtung 72, 74 parallel zur Ebene, die senkrecht zur Werkzeugachse 20 durch den Schwerpunkt der Werkzeugaufnahme 18 verläuft, ausgerichtet. Die horizontale Richtung 72 entspricht der Richtung der Breiteerstreckung des Motorgehäuses 14, während die vertikale Richtung 74 senkrecht zur horizontalen Richtung 72 steht. Das Paar von Lasereinheiten 64, 66 ist zur Anzeige einer Markierachse 76 in horizontaler Richtung 72 der Handwerkzeugmaschine 10 auf dem Werkstück 62 vorgesehen (siehe Figur 5), und das Paar von Lasereinheiten 68, 70 zeigt im Betrieb eine zweite Markierachse 78 in vertikaler Richtung 74 der Handwerkzeugmaschine 10 an. Die Markierachsen 76, 78 am Werkstück 62 treffen sich an einem Punkt, welcher auf der Werkzeugachse 20 liegt. Eine Ausbildung der Markiervorrichtung 60, die zur Anzeige einer Markierachse in nur einer Richtung vorgesehen ist, ist denkbar.

Die Markiervorrichtung 60 weist ein Trägermittel zum Tragen der Lasereinheiten 64, 66, 68, 70 auf, das von der Durchführeinheit 56 gebildet ist. Hierdurch ist die Markiervorrichtung 60 im gekoppelten Zustand der Handwerkzeugmaschineneinheit 28 an der Handwerkzeugmaschine 10 vor der Werkzeugaufnahme 18 und im Bereich der Werkzeugachse 20 angeordnet. Hierbei sind die Lasereinheiten 64, 66, 68, 70 mit einem radialen Abstand von ca. einem Durchmesser des Werkzeugs 22 von der Werkzeugachse 20 beabstandet. Ferner umschließt das von der Durchführeinheit 56 ausgebildete Trägermittel der Markiervorrichtung 60 die Werkzeugachse 20. Die Durchführeinheit 56 weist ein Gehäuse 80 auf, welches aus einem lichtdurchlässigen Material, wie einem transparenten Kunststoff oder Glas, hergestellt ist. Dadurch kann der Bediener einfach die Markierachsen 76, 78 durch die Durchführeinheit 56 sehen. Eine alternative Ausführung der Durchführeinheit 56, in der die Durchführeinheit 56 einstückig mit dem Grundkörper 46 ausgebildet ist, ist in Figur 6 dargestellt. Die Markiervorrichtung 60 ist mittels einer Batterieversorgung 81 mit elektrischem Strom versorgt, die im Grundkörper 46 der Vorsatzeinheit angeordnet ist. Alternativ kann die Markiervorrichtung 60 über die Handwerkzeugmaschine 10 mit elektrischem Strom versorgt werden.

Der Grundkörper 46 der Vorsatzeinheit 44 und die Durchführeinheit 56 bilden ein Abstützmittel 82, durch welches die Vorsatzeinheit 44 bei einer Bearbeitung des Werkstücks 62 gegen eine Abstützfläche 84 des Werkstücks 62 abgestützt werden kann (siehe Figur 6). Durch die Abstützung der Vorsatzeinheit 44 an dem Werkstück 62 ist die Ausrichtung der Markiervorrichtung 60 senkrecht zur Abstützfläche 84 des Werkstücks 62 fixiert.

Zur Ausrichtung der Markiervorrichtung 60 parallel zur Abstützfläche 84 des Werkstücks 62 ist die Handwerkzeugmaschineneinheit 28 mit einer Ausrichtungseinheit 86 versehen. Diese Ausrichtungseinheit 86 ist als Wasserwaage ausgebildet. Die Ausrichtungseinheit 86 ist am Grundkörper 46 der Vorsatzeinheit 44 befestigt. Eine Anordnung der Ausrichtungseinheit 86 der Handwerkzeugmaschineneinheit 28 am Handwerkzeugmaschinengrundkörper 12 ist ebenfalls denkbar. Wie aus dem Prinzip der Wasserwaage bekannt ist, kann eine Abweichung einer Ist-Ausrichtung der Markiervorrichtung 60 von einer Soll-Ausrichtung mit Hilfe der Schwerkraft erfasst werden. Hierbei bildet die Schwerkraftachse eine Referenzachse 88.

Es wird angenommen, dass die Markierachse 76 auf dem Werkstück 62 mit einer Soll-Ausrichtung anzuzeigen ist, welche der horizontalen Richtung des Werkstücks 62 entspricht (siehe Figur 5). Hierbei muss die Markiervorrichtung 60 in eine Soll-Position relativ zur Referenzachse 88 bewegt werden, bei der die horizontale Richtung 72 der Handwerkzeugmaschine 10 mit der horizontalen Richtung des Werkstücks 62 übereinstimmt. Dies ist realisiert, wenn die vertikale Richtung 74 der Handwerkzeugmaschine 10 mit der Referenzachse 88 zusammenfällt. Dabei kann der Bediener über die Abweichung der vertikalen Richtung 74 der Handwerkzeugmaschine von der Referenzachse 88 durch die Ausrichtungseinheit 86 informiert werden, wobei er anhand dieser Information die Markiervorrichtung 60 in die Soll-Position durch eine Bewegung des Handwerkzeugmaschinengrundkörpers 12 bewegen kann. Die Ausrichtungseinheit 86 kann in einem weiteren Beispiel drehbar gelagert und mit einem Winkelmesser versehen sein. Hierbei kann die Ausrichtungseinheit 86 vom Bediener verdreht und mittels des Winkelmessers in eine gewünschte Position gebracht werden. Dadurch können Markierachsen auf dem Werkstück 62 mit beliebigen Soll-Ausrichtungen einfach angezeigt werden.

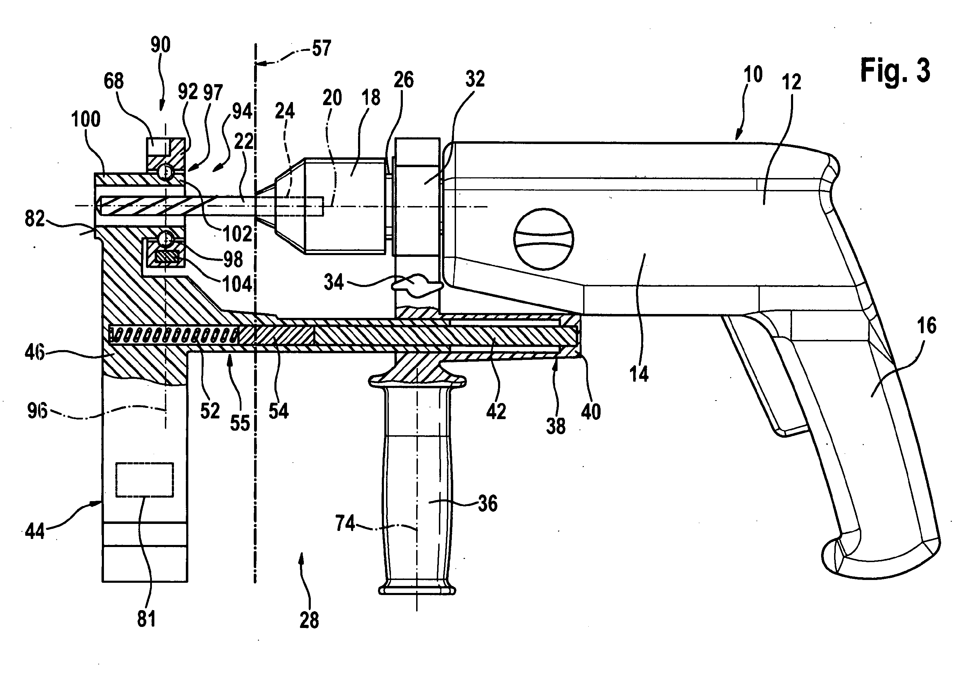

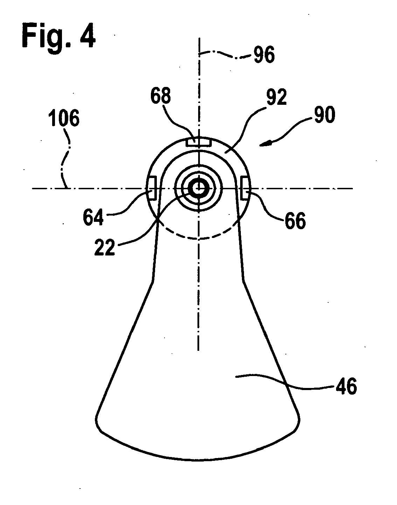

Figur 3 zeigt die Anordnung der Handwerkzeugmaschine 10 und der Handwerkzeugmaschineneinheit 28 aus Figur 1. Die Vorsatzeinheit 44 der Handwerkzeugmaschineneinheit 28 ist mit einer alternativen Markiervorrichtung 90 versehen. Diese Markiervorrichtung 90 ist in einer Frontansicht in Figur 4 dargestellt. Die Markiervorrichtung 90 weist ein Trägermittel 92 zum Tragen der Lasereinheiten 64, 66, 68 auf, welches als Ringelement ausgebildet ist. Die Handwerkzeugmaschineneinheit 28 ist ferner mit einer Ausrichtungseinheit 94 versehen. Diese Ausrichtungseinheit 94 gibt eine Referenzachse 96 vor, die der Schwerkraftachse entspricht, und dient zu einer automatischen Ausrichtung der Markiervorrichtung 90 relativ zur Referenzachse 96. Hierzu weist die Ausrichtungseinheit 94 ein Entkopplungsmittel 97 auf, durch welches die Markiervorrichtung 90 in einer Drehbewegung um die Werkzeugachse 20 von der Handwerkzeugmaschine 10 entkoppelt ist. Das Entkopplungsmittel 97 weist hierzu ein als Kugellagerung ausgebildetes drehbares Lagermittel 98 auf, durch welches das Trägermittel 92 an einer Durchführeinheit 100 zur Durchführung des Werkzeugs 22 gelagert ist. In diesem Beispiel ist die Markiervorrichtung 90 über die Ausrichtungseinheit 94 an einem hülsenförmigen Fortsatz 102 der Durchführeinheit 100 drehbar gelagert. Hierdurch ist die Markiervorrichtung 90 im Bereich der Werkzeugachse 20 vor der Werkzeugaufnahme 18 angeordnet. Insbesondere umschließt das Trägermittel 92 die Werkzeugachse 20. Die Ausrichtungseinheit 94 weist ferner ein Gewichtsmittel 104 auf, welches im Trägermittel 92 angeordnet ist. Die Gewichtskraft des Gewichtsmittels 104 gibt die Referenzachse 96 vor, die der Schwerkraftachse entspricht. Die Lasereinheit 68 ist auf der Referenzachse 96 angeordnet, und die Lasereinheiten 64, 66 sind auf einer Achse 106 senkrecht zur Referenzachse 96 angeordnet. Die Referenzachse 96 und die Achse 106 bilden eine Ebene, die senkrecht zur Werkzeugachse 20 ist.

Durch die Ausrichtungseinheit 94 kann bei einer Bewegung, insbesondere bei einer Drehung der Handwerkzeugmaschine 10 um die Werkzeugachse 20, die Position der Markiervorrichtung 90 relativ zur Referenzachse 96 aufrechterhalten werden. In dieser Konfiguration können unabhängig von einer Drehung der Handwerkzeugmaschine 10 um die Werkzeugachse 20 die Markierachsen 76, 78 in vertikaler bzw. horizontaler Richtung des Werkstücks 62 angezeigt werden, da die dazu erforderliche Soll-Position der Lasereinheiten 64, 66 bzw. 68 relativ zum Werkstück 62 durch die Ausrichtungseinheit 94 automatisch aufrechterhalten bleibt. In einem weiteren Ausführungsbeispiel ist denkbar, dass die Lagerung der Lasereinheiten 64, 66, 68 im Trägermittel 92 relativ zur Referenzachse 96 durch einen Bediener einstellbar ist. Hierzu kann die Markiervorrichtung 90 mit einer Betätigungseinheit versehen sein. Hierdurch können Markierachsen auf dem Werkstück 62 mit beliebigen Soll-Ausrichtungen angezeigt werden.

In Figur 5 ist das als Wand ausgebildete Werkstück 62 in einer Frontansicht gezeigt. Auf dem Werkstück 62 ist die horizontale bzw. vertikale Markierachse 76, 78 angezeigt, welche von den Lasereinheiten der Markiervorrichtung 60 oder 90 erzeugt wird. Es wird angenommen, dass der Bediener ein erstes Bohrloch an einer Position P₁ gebohrt hat. Es sollte das Bohren eines zweiten Bohrlochs an einer Position P₂ durchgeführt werden, welches auf einer horizontalen Linie mit einem gewissen Abstand d zum ersten Bohrloch angeordnet ist. Nach einem Anbringen einer Markierung des Abstands d mit einem Stift auf dem Werkstück 62 wird das Werkzeug 22 auf dieser Markierung platziert. Die Markiervorrichtung 60 bzw. 90 wird mit Hilfe der entsprechenden Ausrichtungseinheit, wie oben beschrieben, relativ zum Werkstück 62 ausgerichtet. Anschließend wird das Werkzeug 22 entlang der Markierung bewegt, bis die Markierachse 76, wie in der Figur dargestellt, und das erste Bohrloch zusammenfallen.

In Figur 6 ist die Anordnung der Handwerkzeugmaschineneinheit 28 und der Handwerkzeugmaschine 10 aus Figur 1 bei einem Bohren des Werkstücks 62 gezeigt. Dabei stützt sich die Vorsatzeinheit 44 über das Abstützmittel 82 am Werkstück 62 ab. Beim Bewegen der Handwerkzeugmaschine 10 in Richtung des Werkstücks 62 bewegt sich das Führungselement 42 im Hohlraum 48 entlang der Werkzeugachse 20. Dabei wird die als Druckfeder ausgebildete Schwingungsentkopplungseinheit 52 zusammengedrückt. Das Abstützmittel 82, das Führungsmittel 38, das Führungselement 42 und der den Hohlraum 48 bildende Fortsatz 50 bilden eine Einheit 108. Durch diese Einheit 108 kann die Handwerkzeugmaschine 10 relativ zur Vorsatzeinheit 44 bewegt werden, wodurch der Abstand zwischen der Markiervorrichtung 60 und dem Werkstück 62 entlang der Werkzeugachse 20 bei dessen Bearbeitung konstant bleibt. Ferner wird einer Übertragung von Vibrationen der Handwerkzeugmaschine 10 auf die Vorsatzeinheit 44 und insbesondere auf die Markiervorrichtung 60 durch die Schwingungsentkopplungseinheit 52 entgegengewirkt.

Die Handwerkzeugmaschineneinheit 28 kann ferner mit weiteren Funktionseinheiten versehen sein. Beispielsweise kann die Vorsatzeinheit 44 mit einer Absaugvorrichtung oder einer Vorrichtung zur Erfassung einer Bohrtiefe versehen sein.

## Patentansprüche

1. Handwerkzeugmaschineneinheit mit einer Markiervorrichtung (60, 90) zur Anzeige einer Markierung an einem Werkstück (62) und einer Koppeleinheit (30) zum Koppeln an einer Handwerkzeugmaschine (10), sowie mit einer Ausrichtungseinheit (86, 94), die dazu dient, die Markiervorrichtung (60, 90) auszurichten, **gekennzeichnet durch** ein Trägermittel (55) für die Markiervorrichtung (60, 90), das im gekoppelten Zustand an einer Handwerkzeugmaschine (10) in einen Werkzeugaufnahmebereich (57) der Handwerkzeugmaschine (10) eingreift, wobei die Markiervorrichtung (60, 90) eine Werkzeugachse der Handwerkzeugmaschine umschließt.

2. Handwerkzeugmaschineneinheit nach Anspruch 1, **dadurch gekennzeichnet, dass** die Ausrichtungseinheit (94) wenigstens ein Entkopplungsmittel (97) aufweist, welches im gekoppelten Zustand an einer Handwerkzeugmaschine (10) zur Entkopplung der Markiervorrichtung (90) von der Handwerkzeugmaschine (10) in zumindest einem Freiheitsgrad vorgesehen ist.

3. Handwerkzeugmaschineneinheit nach Anspruch 1 oder 2, **dadurch gekennzeichnet, dass** mittels des Trägermittels (55) die Markiervorrichtung (60, 90) im Bereich einer Werkzeugachse (20) der Handwerkzeugmaschine (10) angeordnet ist.

4. Handwerkzeugmaschineneinheit nach einem der vorhergehenden Ansprüche, **gekennzeichnet durch** eine Durchführeinheit (56, 100), die zur Durchführung eines Werkzeugs (22) vorgesehen ist, mit welcher die Markiervorrichtung (60, 90) direkt gekoppelt ist.

5. Handwerkzeugmaschineneinheit nach einem der vorhergehenden Ansprüche, **gekennzeichnet durch** ein Abstützmittel (82), welches zur Abstützung am Werkstück (62) vorgesehen ist.

6. Handwerkzeugmaschineneinheit nach einem der vorhergehenden Ansprüche, **gekennzeichnet durch** eine Einheit (108), die dazu vorgesehen ist, bei einer Bearbeitung des Werkstücks (62) einen Abstand zwischen der Markiervorrichtung (60, 90) und dem Werkstück (62) aufrechtzuerhalten.

7. Handwerkzeugmaschineneinheit nach einem der vorhergehenden Ansprüche, **gekennzeichnet durch** ein drehbares Lagermittel (98), mittels dessen im gekoppelten Zustand an einer Handwerkzeugmaschine (10) die Markiervorrichtung (90) relativ zur Handwerkzeugmaschine (10) drehbar gelagert ist.

8. Handwerkzeugmaschineneinheit nach einem der vorhergehenden Ansprüche, **gekennzeichnet durch** eine Schwingungsentkopplungseinheit (52), die dazu vorgesehen ist, im gekoppelten Zustand an einer Handwerkzeugmaschine (10) einer Übertragung von Schwingungen der Handwerkzeugmaschine (10) auf die Markiervorrichtung (60, 90) entgegenzuwirken.

9. Handwerkzeugmaschineneinheit nach einem der vorhergehenden Ansprüche, **gekennzeichnet durch** die Ausbildung als Handwerkzeugmaschinenzusatzeinheit, welche zur Abkopplung von einem Handwerkzeugmaschinengrundkörper (12) vorgesehen ist.

10. Handwerkzeugmaschine mit einer Handwerkzeugmaschineneinheit (28) nach einem der Ansprüche 1 bis 9.

## Claims

1. Portable power tool unit having a marking device (60, 90) for indicating a marking on a workpiece (62) and a coupling unit (30) for coupling to a portable power tool (10), and also having an aligning unit (86, 94) which serves to align the marking device (60, 90), **characterized by** a carrier means (55) for the marking device (60, 90), said carrier means (55) engaging, in the state coupled to a portable power tool (10), in a tool holding region (57) of the portable power tool (10), wherein the marking device (60, 90) encloses a tool axis of the portable power tool.

2. Portable power tool unit according to Claim 1, **characterized in that** the aligning unit (94) has at least one decoupling means (97) which is provided, in the state coupled to a portable power tool (10), to decouple the marking device (90) from the portable power tool (10) in at least one degree of freedom.

3. Portable power tool unit according to Claim 1 or 2, **characterized in that**, by means of the carrier means (55), the marking device (60, 90) is arranged in the region of a tool axis (20) of the portable power tool (10).

4. Portable power tool unit according to one of the preceding claims, **characterized by** a pass-through unit (56, 100) which is provided for a tool (22) to pass through and to which the marking device (60, 90) is directly coupled.

5. Portable power tool unit according to one of the preceding claims, **characterized by** a supporting means (82) which is provided for supporting on the workpiece (62).

6. Portable power tool unit according to one of the preceding claims, **characterized by** a unit (108) which is provided to maintain a distance between the marking device (60, 90) and the workpiece (62) during machining of the workpiece (62).

7. Portable power tool unit according to one of the preceding claims, **characterized by** a rotatable mounting means (98), by means of which, in the state coupled to a portable power tool (10), the marking device (90) is mounted in a rotatable manner in relation to the portable power tool (10).

8. Portable power tool unit according to one of the preceding claims, **characterized by** a vibration isolating unit (52) which is provided, in the state coupled to a portable power tool (10), to counteract a transmission of vibrations from the portable power tool (10) to the marking device (60, 90).

9. Portable power tool unit according to one of the preceding claims, **characterized by** the formation as a portable power tool auxiliary unit which is provided for uncoupling from a portable power tool main body (12).

10. Portable power tool having a portable power tool unit (28) according to one of Claims 1 to 9.

## Revendications

1. Unité de machine-outil manuelle comprenant un dispositif de marquage (60, 90) pour indiquer un marquage sur une pièce (62) et une unité d'accouplement (30) pour l'accouplement à une machine-outil manuelle (10), et comprenant aussi une unité d'orientation (86, 94) qui sert à orienter le dispositif de marquage (60, 90), **caractérisée par** un moyen porteur (55) pour le dispositif de marquage (60, 90), lequel vient en prise dans l'état accouplé sur une machine-outil manuelle (10) dans une région de porte-outil (57) de la machine-outil manuelle (10), le dispositif de marquage (60, 90) entourant un axe d'outil de la machine-outil manuelle.

2. Unité de machine-outil manuelle selon la revendication 1, **caractérisée en ce que** l'unité d'orientation (94) présente au moins un moyen de désaccouplement (97) qui, dans l'état accouplé sur une machine-outil manuelle (10) est prévu pour désaccoupler le dispositif de marquage (90) de la machine-outil manuelle (10), suivant au moins un degré de liberté.

3. Unité de machine-outil manuelle selon la revendication 1 ou 2, **caractérisée en ce qu'**à l'aide du moyen porteur (55), le dispositif de marquage (60, 90) est disposé dans la région d'un axe d'outil (20) de la machine-outil manuelle (10).

4. Unité de machine-outil manuelle selon l'une quelconque des revendications précédentes, **caractérisée par** une unité de passage (56, 100) qui est prévue pour le passage d'un outil (22), et à laquelle le dispositif de marquage (60, 90) est directement accouplé.

5. Unité de machine-outil manuelle selon l'une quelconque des revendications précédentes, **caractérisée par** un moyen d'appui (82) qui est prévu pour l'appui contre la pièce (62).

6. Unité de machine-outil manuelle selon l'une quelconque des revendications précédentes, **caractérisée par** une unité (108) qui est prévue pour maintenir une distance entre le dispositif de marquage (60, 90) et la pièce (62) lors de l'usinage de la pièce (62).

7. Unité de machine-outil manuelle selon l'une quelconque des revendications précédentes, **caractérisée par** un moyen de palier rotatif (98) au moyen duquel, dans l'état accouplé à une machine-outil manuelle (10), le dispositif de marquage (90) est supporté de manière rotative par rapport à la machine-outil manuelle (10).

8. Unité de machine-outil manuelle selon l'une quelconque des revendications précédentes, **caractérisée par** une unité de découplage d'oscillations (52) qui est prévue pour agir à l'encontre d'un transfert d'oscillations de la machine-outil manuelle (10) au dispositif de marquage (60, 90) dans l'état accouplé à une machine-outil manuelle (10).

9. Unité de machine-outil manuelle selon l'une quelconque des revendications précédentes, **caractérisée par** la réalisation sous forme d'unité supplémentaire de machine-outil manuelle, qui est prévue pour être désaccouplée d'un corps de base de machine-outil manuelle (12).

10. Machine-outil manuelle comprenant une unité de machine-outil manuelle (28) selon l'une quelconque des revendications 1 à 9.
